# FASCICULE DE BREVET EUROPEEN

(11) **EP 3 658 760 B1**
(45) Date de publication et mention de la délivrance du brevet: **15.12.2021**
(21) Numéro de dépôt: 18759156.5
(22) Date de dépôt: 23.07.2018
(51) Int. Cl.: F01D 25/00, F02C 7/32, H01B 7/29, H05K 1/02

(54) **HARNAIS ELECTRIQUE**
ELEKTRISCHER KABELBAUM
ELECTRICAL HARNESS

(30) Priorité: 24.07.2017 FR 1757004
(43) Date de publication de la demande: 03.06.2020
(73) Titulaire: Safran Aircraft Engines, 75015 Paris (FR)
(72) Inventeur: KWAKYE, George, Alex, 77550 MOISSY-CRAMAYEL (FR); KIEFFER, Benoit, Marie, Bernard, 77550 MOISSY-CRAMAYEL (FR); GAUVRIT, Jacques, Paul, Michel, 77550 MOISSY-CRAMAYEL (FR); SCHIELIN, Jean-François, Jean-Paul, Clément, 77550 MOISSY-CRAMAYEL (FR)
(74) Mandataire: Ernest Gutmann - Yves Plasseraud S.A.S.
(86) Numéro de dépôt international: PCT/FR2018/051879
(87) Numéro de publication internationale: WO 2019/020919

(56) Documents cités:
- US-A1- 2002 070 041
- US-A1- 2005 122 201
- US-A1- 2014 102 782
- US-B1- 6 359 443

## Description

### DOMAINE

La présente invention concerne le domaine des harnais électriques, plus particulièrement celui des harnais électriques équipant des turbomachines.

### CONTEXTE

Un harnais électrique est un dispositif électronique qui véhicule des signaux électriques entre différents équipements. Dans le cas d'une turbomachine équipée d'un calculateur et de nombreux capteurs, des harnais électriques sont placés entre le calculateur et les capteurs de façon à véhiculer - vers le calculateur - les mesures effectuées par ces capteurs.

En particulier, les turbomachines dites à double corps comprenant un corps basse pression et un corps haute pression sont équipées de capteurs servant à mesurer le régime de rotation du corps basse pression appelé régime N1 et le régime de rotation du corps haute pression appelé régime N2.

Ces capteurs des régimes N1 et N2 peuvent être perturbés par des vibrations du moteur de la turbomachine. Les signaux de mesure des régimes peuvent alors être parasités par des pics de bruits pouvant entraîner de fausses détections de panne sur le moteur. Ce parasitage peut n'être observable que lors de certains régimes de fonctionnement comme par exemple lors d'un démarrage du moteur.

Pour réduire le niveau de bruit du signal, il est possible de filtrer le signal en utilisant un filtre analogique, également appelé circuit électronique de filtrage dans la suite du document, qui peut être intégré dans un circuit électronique de comptage, comme illustré par exemple dans la demande de brevet US 20030231013. Le document US2005/122201A1 divulgue un harnais électrique selon l'art antérieur.

Ce circuit électronique de comptage est généralement intégré au calculateur connu sous l'acronyme FADEC pour Full Authority Digital Engine Control Electronic en anglais) de la turbomachine.

Le calculateur est généralement situé dans la nacelle entourant la soufflante de la turbomachine. Il s'agit d'un système électronique de contrôle moteur. Dans la plupart des cas, l'intégralité des harnais électriques et le calculateur se trouvent en zone feu. Les zones feu sont définies comme étant des zones de la turbomachine dans lesquelles un feu est susceptible de se déclencher. Ces harnais électriques sont généralement pourvus de moyens de protection thermiques ou de couches thermiquement isolantes afin d'être résistants dans des conditions sévères de températures, comme l'illustre la demande de brevet française FR 2901423. Le calculateur comprend généralement des moyens de refroidissement ainsi que des moyens de détection d'un incendie.

Afin d'éviter de reconcevoir le calculateur, il est préférable d'intégrer le circuit électronique de filtrage dans un harnais électrique transportant les signaux à transmettre au calculateur. Il n'est pas non plus souhaitable de modifier un capteur pour y intégrer un circuit électronique de filtrage car la masse du capteur doit être limitée afin que sa position dans la turbomachine reste suffisamment stable sous l'influence des vibrations du moteur.

L'intégration d'un circuit électronique de filtrage dans un harnais électrique soulève plusieurs difficultés. Dans une configuration où l'intégralité du harnais est en zone feu, le circuit électronique de filtrage intégré dans le harnais doit traiter des signaux OFR (Operating Fire Resistant en anglais) transportés par le harnais, ces signaux devant rester disponibles même en cas d'incendie. Les signaux sont dits OFR lorsqu'ils sont disponibles en cas de feu pendant une durée minimale de cinq minutes. En pratique, le harnais électrique doit tenir le feu pendant au moins cinq minutes. Les composants électriques du circuit électronique de filtrage intégré dans le harnais devraient alors tenir à 1100°C selon la norme ISO 2685 : 1998(E) ce qui n'est pas le cas dans la pratique.

Il n'est pas nécessaire que le circuit électronique de filtrage soit fonctionnel au bout des cinq minutes de feu, même si la température de l'environnement revient à une température ambiante. La perte de la fonctionnalité du circuit électronique de filtrage est acceptable à condition que cela n'entrave pas la transmission du signal, même bruité, véhiculé par le harnais vers le calculateur.

Une problématique est donc l'intégration d'un circuit électronique de filtrage pouvant contenir des composants électriques basse température dans un harnais électrique résistant au feu, sans compromettre, en cas d'incendie, la transmission des signaux OFR transportés par le harnais. Ces signaux peuvent être dégradés en cas d'incendie mais doivent impérativement être transmis au calculateur, et ne doivent pas subir de dégradations critiques au-delà de cinq minutes d'exposition au feu.

### RESUME

La présente invention porte en premier lieu sur un harnais électrique pour une turbomachine, comprenant une première terminaison connectée à un appareil apte à émettre un signal électrique, et une deuxième terminaison connectée à un appareil de traitement du signal, caractérisé en ce qu'il comprend un circuit électronique de filtrage du signal, ledit circuit comprenant au moins un composant électronique associé à un seuil de température de fonctionnement, et au moins un moyen d'interruption électrique à déclenchement thermique monté en série ou en parallèle avec ledit au moins un composant électronique, ledit au moins un moyen d'interruption électrique étant apte à passer d'un état ouvert dans lequel un courant ne peut pas le traverser, à un état fermé dans lequel un courant peut le traverser, ou réciproquement d'un état fermé à un état ouvert, à partir d'une température de déclenchement inférieure ou égale au seuil de température de fonctionnement dudit au moins un composant électronique, de manière à continuer à assurer une transmission électrique entre la première terminaison et la seconde terminaison si la température devient supérieure à ladite température de déclenchement.

Ainsi, la défaillance d'un composant associé à un seuil de température de fonctionnement n'empêche pas la transmission du signal électrique vers le calculateur puisque l'interrupteur à déclenchement thermique présente une température de déclenchement inférieure ou égale au seuil de température de fonctionnement du composant électronique.

Selon une caractéristique particulière, le moyen d'interruption électrique est choisi parmi la liste suivante : interrupteur thermique, fusible et disjoncteur thermique.

Un interrupteur thermique permet de passer d'un état ouvert à un état fermé permettant de laisser le courant circuler. Un fusible ou un disjoncteur thermique permet de passer d'un état fermé à un état ouvert et est employé pour empêcher un court-circuit.

Selon une caractéristique particulière, le circuit électronique de filtrage du signal comprend une résistance et un condensateur montés en série. Ce montage constitue un filtre RC passe bas permettant de filtrer les hautes fréquences du signal électrique. D'autres types de filtres peuvent être employés (passe haut, passe bande...) selon le type de filtrage désiré.

Selon une caractéristique particulière, la résistance est montée en parallèle avec un interrupteur thermique. Cette configuration permet d'empêcher la perte du signal dans le cas où la résistance présente un mode de défaillance équivalent à un circuit ouvert.

Selon une caractéristique particulière, le condensateur est monté en série avec un fusible ou avec un disjoncteur thermique. Cela permet d'empêcher un court-circuit en cas de défaillance du condensateur.

Selon une caractéristique particulière, le circuit électronique de filtrage est recouvert de tresse métallique et d'une gaine thermo rétractable ou d'un surmoulage, afin de garantir la continuité du blindage du harnais électrique.

Selon une caractéristique particulière, l'une des première ou deuxième terminaisons comprend un connecteur intégrant ledit circuit électronique de filtrage dudit signal. Ce positionnement permet de faciliter l'intégration du circuit électronique de filtrage dans le harnais par l'homme du métier.

Selon une caractéristique particulière, le harnais comprend un boitier résistant au feu intégrant le circuit électronique de filtrage. Cette configuration est utilisée en alternative au positionnement du filtre dans un connecteur du harnais électrique.

L'invention concerne également porte une turbomachine comprenant au moins un rotor, un capteur apte à mesurer un régime de rotation du rotor et un calculateur apte à recevoir une mesure dudit régime de rotation, caractérisée en ce qu'elle comprend un harnais électrique selon l'une des revendications précédentes dont la première terminaison est connectée au capteur du régime de rotation et la deuxième terminaison est connectée au calculateur. Ce type de turbomachine peut être employé pour des essais incendie par exemple.

Selon une autre caractéristique la turbomachine peut comprendre un corps basse pression associé à un régime de rotations N1 et un corps haute pression associé à un régime de rotation N2, comprenant des capteurs aptes à mesurer les régimes de rotations N1 et N2 et un calculateur apte à recevoir un signal de mesure du régime N1 et/ou N2, la première terminaison étant connectée à l'un des capteurs. Ainsi, le circuit électronique de filtrage garantit à la fois le filtrage du signal en condition normale (pas d'incendie), et permet, en cas d'incendie de garantir une transmission des signaux de régime pendant une durée minimale de cinq minutes.

L'invention sera mieux comprise et d'autres détails, caractéristiques et avantages de l'invention apparaîtront à la lecture de la description suivante faite à titre d'exemple non limitatif en référence aux dessins.

### BREVE DESCRIPTION DES DESSINS

**FIG.1** est un schéma simplifié de turbomachine.
**FIG.2** est un schéma du harnais électrique selon un exemple de mode de réalisation.
**FIG.3** est un schéma du harnais électrique selon un exemple de mode de réalisation.
**FIG.4** est un schéma du harnais électrique selon un exemple de mode de réalisation.
**FIG.5** est un schéma simplifié d'un harnais électrique intégrant un filtre analogique de type passe bas.
**FIG.6** est un schéma simplifié d'un harnais électrique intégrant un filtre analogique de type passe haut.
**FIG.7** est un schéma simplifié d'un harnais électrique intégrant un filtre analogique de type passe bande.

### DESCRIPTION DETAILLEE

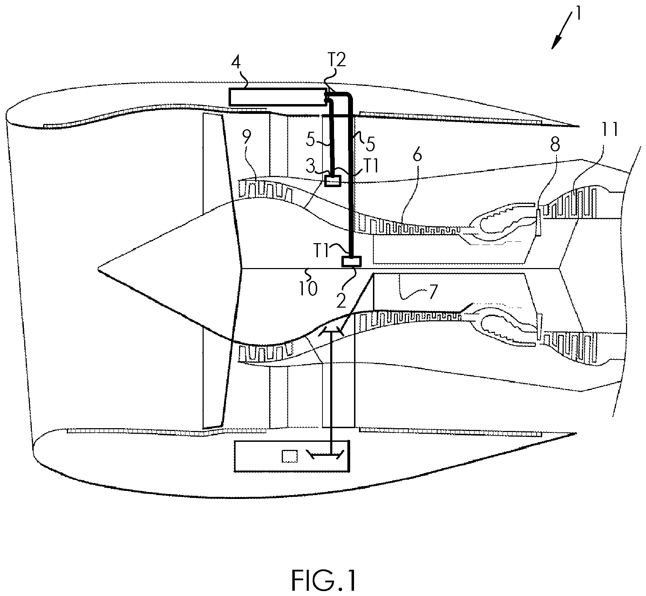

Nous nous référons dans un premier temps à la **FIG.1** représentant une turbomachine 1 à double corps. Cette turbomachine 1 comprend un corps basse pression comprenant un rotor dont le régime de rotation est appelé N1, et un corps haute pression comprenant un rotor dont le régime de rotation est appelé N2, le rotor haute pression et le rotor basse pression étant coaxiaux et rotatifs indépendamment l'un de l'autre. La turbomachine comprend en outre des capteurs **2** et **3** aptes à mesurer les régimes de rotations N1 et N2, respectivement et un calculateur **4** apte à recevoir les signaux de mesure des régimes N1 et N2. Le corps haute pression comprend un compresseur haute pression **6** et une turbine haute pression. Le rotor haute pression comprend un arbre **7** reliant une pluralité de roues aubagées du compresseur haute pression à au moins une roue aubagée de la turbine haute pression **8.** Le corps basse pression comprend un compresseur basse pression **9** et une turbine basse pression **11.** Le rotor basse pression comprend un arbre **7** reliant une pluralité de roues aubagées du compresseur basse pression à une pluralité de roues aubagées de la turbine basse pression **8.** Comme cela est représenté sur la figure 1, l'arbre haute pression entoure l'arbre basse pression 10.

Cette turbomachine **1** comprend en outre deux harnais électriques **5** comprenant chacun une première terminaison **T1** connectée à l'un des capteurs **2** ou **3** et une deuxième terminaison **T2** connectée au calculateur **4.** Les harnais électriques **5** présentent la particularité d'être résistants au feu et comprennent chacun un filtre analogique apte à filtrer un signal électrique en condition normale (pas d'incendie), et permettant, en cas d'incendie, de garantir une transmission des signaux de régime pendant une durée minimale de cinq minutes.

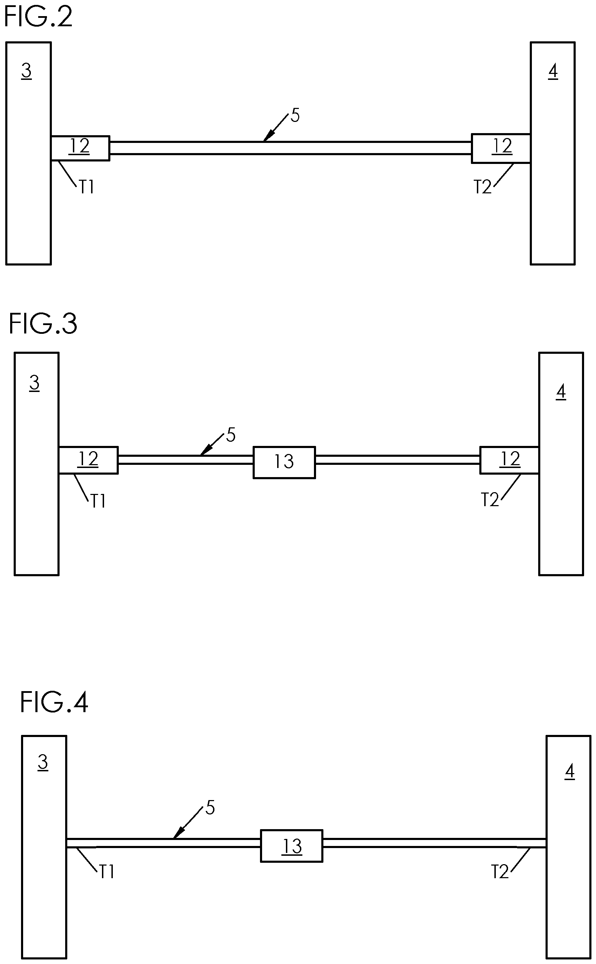

Ainsi, chaque harnais électrique **5** comprend une première terminaison **T1** connectée à un appareil apte à émettre un signal électrique (par exemple un capteur **3**), et une deuxième terminaison **T2** connectée à un appareil de traitement du signal (ici un calculateur **4**) comme illustré dans les **FIG.2**, **FIG.3** et **FIG.4**.

Selon les modes de réalisation des **FIG.2** et **FIG.3**, le harnais électrique 5 peut comprendre un connecteur **12** à chaque terminaison **T1** et **T2**.

Selon les modes de réalisation des **FIG.3** et **FIG.4****,** le harnais électrique **5** comprend un boitier **13** résistant au feu.

Selon le mode de réalisation de la **FIG.4**, la première terminaison **T1** n'est pas déconnectable du capteur **3** et la deuxième terminaison **T2** n'est pas déconnectable du calculateur **4**. D'une façon générale, le harnais électrique **5** peut comprendre une terminaison **T1** ou **T2** déconnectable ou non déconnectable de l'appareil auquel elle est connectée.

Chaque harnais **5** comprend un circuit électronique de filtrage du signal. Ce circuit peut être intégré soit dans le boitier **13** résistant au feu illustré en **FIG.3** ou en **FIG.4**, ou dans un des connecteurs **12** comme illustré sur les **FIG.2** et **FIG.3**. Le filtre peut être recouvert de tresse métallique pour en assurer le blindage, et d'une gaine thermo rétractable ou d'un surmoulage.

Un positionnement du filtre dans un des connecteurs **12**, constituant des points de supportage du harnais, permet de faciliter l'intégration du filtre dans le harnais **5** par l'homme du métier.

Si le filtre est intégré dans un boitier **13**, ce dernier est au moins en partie métallique de manière à en assurer le blindage. Dans cette configuration, le raccordement d'un câble de harnais au boitier 13 peut être déconnectable ou non.

Ce circuit électronique de filtrage comprend au moins un composant électronique (par exemple une résistance **R** ou un condensateur **C**) associé à un seuil de température de fonctionnement, et un moyen d'interruption électrique à déclenchement thermique monté en série ou en parallèle avec ledit composant électronique, ledit moyen d'interruption électrique étant apte à passer d'un état ouvert dans lequel un courant ne peut pas le traverser, à un état fermé dans lequel un courant peut le traverser, ou réciproquement d'un état fermé à un état ouvert, à partir d'une température de déclenchement inférieure ou égale au seuil de température de fonctionnement dudit composant électronique.

Ainsi, la défaillance d'un composant associé à un seuil de température de fonctionnement n'empêche pas la transmission du signal électrique vers le calculateur **4**.

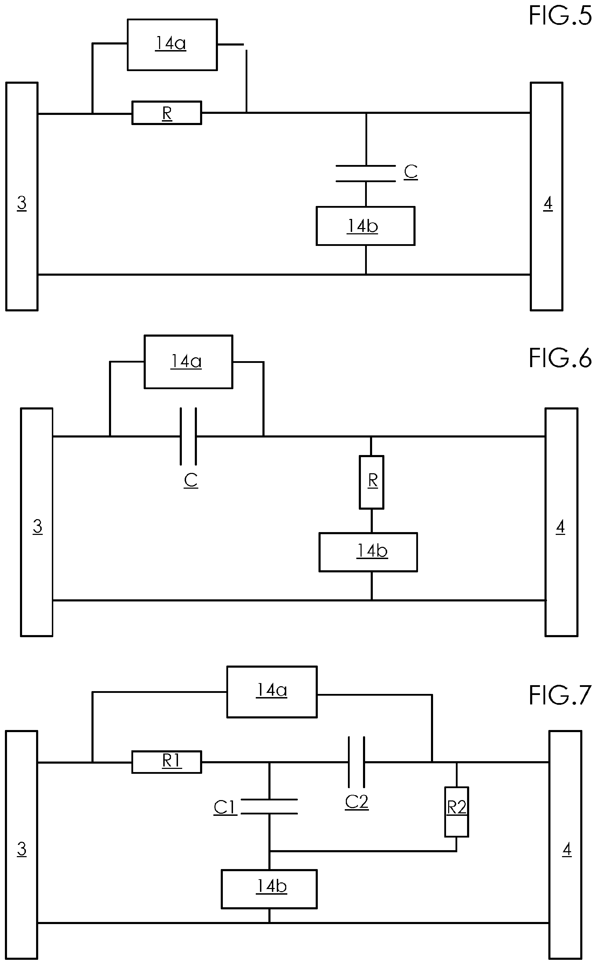

Nous nous référons aux **FIG.5**, **FIG.6** et **FIG.7** pour illustrer trois exemples de modes de réalisation avec à chaque fois un type de filtre différent intégré dans le harnais électrique **5**.

Selon le mode de réalisation de la **FIG.5**, le filtre intégré dans le harnais électrique **5** est un filtre RC passe bas. Il contient donc deux composants électroniques basse température : une résistance **R** et un condensateur **C**. La résistance **R** et le condensateur **C** sont montés en série. En cas de feu, les modes de défaillances de la résistance R et du condensateur **C** correspondent à des circuits ouverts ou fermés. Chaque mode de défaillance a une conséquence sur le comportement fonctionnel du circuit :
- si la résistance **R** se comporte comme un circuit ouvert, il y a une perte du signal mesuré,
- si la résistance **R** se comporte comme un circuit fermé, le filtre n'est plus effectif, mais la transmission du signal est conservée,
- si le condensateur **C** se comporte comme un circuit ouvert, le filtre n'est plus effectif, mais la transmission du signal est conservée,
- si le condensateur **C** se comporte comme un circuit fermé, cela génère un court-circuit et il y a une perte du signal mesuré.

En cas de défaillance du filtre et de transmission d'un signal, le signal transmis est bruité. Une double détection de panne correspondant à la détection d'un feu conjointement à une fausse détection de panne liée à un pic de bruit sur le signal transmis est peu probable en pratique. Les modes de défaillance ayant pour conséquence une perte du signal mesuré, quant à eux, ne sont pas acceptables sur le plan pratique, et ce d'autant plus lorsqu'il s'agit d'un signal de mesure du régime N1. Dans le cas particulier d'un feu, la perte de fonctionnalité du filtre est acceptable, à condition que le signal non filtré reste exploitable pour la mesure du régime N1.

En effet, la perte du signal issu du capteur **3** de régime N1 n'est pas acceptable car le calculateur **4** ne peut pas réguler le moteur sans cette mesure. La perte d'un tel signal entraînerait de graves disfonctionnements pouvant aboutir à une perte de contrôle de la poussée du moteur.

Pour lutter contre le mode de disfonctionnement en circuit ouvert de la résistance **R**, un moyen d'interruption électrique à déclenchement thermique est monté en parallèle avec la résistance **R**, ledit moyen d'interruption thermique étant apte à passer d'un état ouvert dans lequel le courant ne circule pas à un état fermé dans lequel le courant circule. Ainsi, en état fermé, le moyen d'interruption électrique permet au courant de circuler tandis que la résistance **R** est en circuit ouvert. Le moyen d'interruption électrique, dans ce cas est un interrupteur thermique comme par exemple un bilame **14a**. Le bilame **14a** permet, au-delà d'une certaine température, c'est-à-dire d'une température de déclenchement, de court-circuiter la résistance **R**. Les caractéristiques thermiques du déclenchement de l'interrupteur constitué par le bilame **14a** sont prévues de telle sorte que le court-circuit de la résistance **R** ait lieu avant la défaillance de la résistance **R**. Pour cela la température à laquelle le bilame **14a** se déclenche pour court-circuiter la résistance **R** est inférieure au seuil de température de fonctionnement de la résistance **R**.

Selon une caractéristique particulière, le bilame **14a** est constitué de matériaux (par exemple en céramique) dont la température de fusion est supérieure à une température maximum constatée en condition de feu. La température maximum constatée en condition de feu est généralement de 1100°C.

Selon une caractéristique particulière, le type de bilame utilisé est préférentiellement un bilame à retournement brusque (également appelé bilame cloquant) car ce type de bilame est le moins sensible aux vibrations mécaniques. Ainsi, le bilame **14a** est apte à changer de position rapidement à partir d'un certain seuil de température.

Pour lutter contre le mode de disfonctionnement en circuit fermé du condensateur **C**, un moyen d'interruption électrique à déclenchement thermique est monté en série avec le condensateur, ledit moyen d'interruption électrique étant apte à passer d'un état fermé à un état ouvert dans lequel le court-circuit -qui aurait été induit par le mode de défaillance en circuit fermé du condensateur **C-** est évité. Ce moyen d'interruption électrique est par exemple un fusible **14b** ou un disjoncteur thermique. Le fusible **14b** permet de déconnecter le condensateur **C** au-delà d'une certaine température, ce qui permet de pallier à la situation où le condensateur **C** se mettrait en court-circuit. Le fusible **14b** est prévu pour claquer avant la défaillance du condensateur **C**. La température de fusion du fusible **14b** est donc choisie inférieure au seuil de température de fonctionnement du condensateur **C**.

Pour éviter la perte du signal, le bilame **14a** doit se déclencher avant la dégradation de la résistance **R** et le fusible **14b** doit se déclencher avant la dégradation du condensateur **C**. En cas d'incendie, l'évolution de la température étant rapide dans un équipement de faible masse tel qu'un harnais électrique, les instants des déclenchements respectifs du bilame **14a** et du fusible **14b** seront séparés d'un intervalle de temps relativement bref même dans le cas où les températures respectives de déclenchement de ces deux éléments d'interruption électrique sont assez différentes. Par exemple, si le fusible 14b se déclenche (claque) avant le déclenchement (retournement) du bilame, le circuit RC devient provisoirement un circuit à simple résistance R. Néanmoins, cette situation n'aura pas d'impact sur la régulation du moteur par le calculateur **4.** Il n'est donc pas indispensable que le bilame **14a** et le fusible **14b** soient choisis de sorte que leurs températures respectives de déclenchement soient proches l'une de l'autre. Ces températures de déclenchement seront généralement comprises dans une plage entre 150°C et 350°C, mais des valeurs plus élevées restent envisageables si les seuils de températures de fonctionnement de la résistance R et du condensateur C dépassent cette plage.

D'autres types de filtres peuvent être employés (passe haut, passe bande...) selon le type de filtrage désiré.

La **FIG.6** représente un harnais 5 équipé d'un filtre RC passe haut. Dans ce cas particulier, les modes de défaillances sont les mêmes que dans le cas du filtre RC passe bas précédemment décrit mais sont inversés entre la résistance R et le condensateur C. Cette fois-ci, la perte du signal de mesure correspond à une défaillance en circuit ouvert du condensateur C ou à une défaillance en circuit fermé de la résistance R (court-circuit). Dans ce cas, un interrupteur thermique est monté en parallèle avec le condensateur C de sorte qu'avant que le condensateur C se comporte en circuit ouvert sous l'effet d'une température trop élevée, l'interrupteur passe d'un état ouvert à un état fermé permettant de laisser passer le courant électrique. Par ailleurs, un fusible **14b** est monté en série avec la résistance R afin d'éviter un court-circuit dans le cas où la résistance R se comporterait comme un circuit fermé sous l'effet d'une température trop élevée.

La **FIG.7** représente un harnais électrique 5 équipé d'un filtre passe bande. Il se présente sous la forme d'un filtre RC passe bas monté en série avec un filtre RC passe haut. De la même manière que pour les filtres précédemment décrits, les modes de défaillance sont gérés par des moyens d'interruption électrique à déclenchement thermique. Le mode de défaillance en circuit ouvert de la résistance **R1** ou du condensateur **C2** est géré par un bilame **14a** monté en parallèle avec ces deux composants. Les modes de défaillance en circuit fermé du condensateur **C1** et de la résistance **R2** sont gérés par un fusible **14b.**

Ainsi, les modes de réalisations décrits permettent d'intégrer un circuit électronique de filtrage pouvant contenir des composants basse température tels qu'une résistance ou un condensateur, dans un harnais électrique résistant au feu reliant un capteur 3 et un calculateur 4, sans compromettre, en cas d'incendie, la transmission des signaux OFR transportés par le harnais électrique 5.

## Revendications

1. Harnais électrique (**5**) pour une turbomachine, comprenant une première terminaison (**T1**) connectée pendant l'utilisation à un appareil (**3**) apte à émettre un signal électrique, et une deuxième terminaison (**T2**) connectée pendant l'utilisation à un appareil (**4**) de traitement du signal, **caractérisé en ce qu'**il comprend un circuit électronique de filtrage du signal, ledit circuit comprenant au moins un composant électronique associé à un seuil de température de fonctionnement, et au moins un moyen d'interruption électrique à déclenchement thermique monté en série ou en parallèle avec ledit au moins un composant électronique, ledit au moins un moyen d'interruption électrique étant apte à passer d'un état ouvert dans lequel un courant ne peut pas le traverser, à un état fermé dans lequel un courant peut le traverser, ou réciproquement d'un état fermé à un état ouvert, à partir d'une température de déclenchement inférieure ou égale au seuil de température de fonctionnement dudit au moins un composant électronique, de manière à continuer à assurer une transmission électrique entre la première terminaison et la seconde terminaison si la température devient supérieure à ladite température de déclenchement.

2. Harnais électrique (5) selon la revendication 1, **caractérisé en ce que** le moyen d'interruption électrique est choisi parmi la liste suivante : interrupteur thermique, fusible et disjoncteur thermique.

3. Harnais électrique (5) selon la revendication 1 ou 2, **caractérisé en ce que** le circuit électronique de filtrage du signal comprend une résistance (R) et un condensateur (C) réalisant un circuit RC série.

4. Harnais électrique (5) selon la revendication 3, **caractérisé en ce que** la résistance (R) est montée en parallèle avec un interrupteur thermique tel qu'un bilame (14a) à retournement brusque.

5. Harnais électrique (5) selon la revendication 3 ou 4, **caractérisé en ce que** le condensateur (C) est monté en série avec un fusible (14b) ou avec un disjoncteur thermique.

6. Harnais électrique selon l'une des revendications précédentes, **caractérisé en ce que** l'une des terminaisons (T1) ou (T2) comprend un connecteur (12) intégrant le circuit électronique de filtrage dudit signal.

7. Harnais électrique (5) selon l'une des revendications 1 à 5, **caractérisé en ce que** le harnais électrique (5) comprend un boitier (13) résistant au feu intégrant le circuit électronique de filtrage.

8. Harnais électrique (5) selon l'une des revendications précédentes, **caractérisé en ce que** le circuit électronique de filtrage est recouvert de tresse métallique et d'une gaine thermo rétractable ou d'un surmoulage.

9. Turbomachine comprenant au moins un rotor, un capteur apte à mesurer un régime de rotation du rotor et un calculateur apte à recevoir une mesure dudit régime de rotation, **caractérisée en ce qu'**elle comprend un harnais électrique selon l'une des revendications précédentes dont la première terminaison est connectée au capteur du régime de rotation et la deuxième terminaison est connectée au calculateur.

10. Turbomachine (1) selon la revendication 9, comprenant un corps basse pression associé à un régime de rotation N1 et un corps haute pression associé à un régime de rotation N2, comprenant des capteurs (2) et (3) aptes à mesurer les régimes de rotations N1 et N2 et un calculateur (4) apte à recevoir un signal de mesure du régime N1 et/ou N2, **caractérisée en ce que** la première terminaison (T1) du harnais électrique (5) est connectée à l'un des capteurs (2) ou (3).

## Patentansprüche

1. Elektrischer Kabelbaum (5) für eine Turbomaschine, enthaltend einen ersten Abschluss (T1), der während des Betriebs mit einer Einrichtung (3) verbunden ist, die ein elektrisches Signal ausgeben kann, und einen zweiten Abschluss (T2), der während des Betriebs mit einer Einrichtung (4) zur Verarbeitung des Signals verbunden ist, **dadurch gekennzeichnet, dass** er eine elektronische Schaltung zur Filterung des Signals umfasst, wobei die Schaltung zumindest ein elektronisches Bauteil, dem eine Betriebstemperaturschwelle zugeordnet ist, und zumindest ein Mittel zur thermisch ausgelösten elektrischen Unterbrechung umfasst, das mit dem zumindest einen elektronischen Bauteil in Reihe oder parallel geschaltet ist, wobei das zumindest eine Mittel zur elektrischen Unterbrechung dazu geeignet ist, von einem offenen Zustand, in dem kein Strom fließen kann, in einen geschlossenen Zustand überzugehen, in dem ein Strom fließen kann, oder umgekehrt von einem geschlossenen Zustand in einen offenen Zustand, ausgehend von einer Auslösetemperatur, die niedriger als oder gleich der Betriebstemperaturschwelle des zumindest einen elektronischen Bauteils ist, so dass weiterhin eine elektrische Übertragung zwischen dem ersten Abschluss und dem zweiten Abschluss gewährleistet ist, wenn die Temperatur höher als die Auslösetemperatur wird.

2. Elektrischer Kabelbaum (5) nach Anspruch 1, **dadurch gekennzeichnet, dass** das elektrische Unterbrechungsmittel aus der Gruppe umfassend Thermoschalter, Sicherung und Thermo-Schutzschalter ausgewählt ist.

3. Elektrischer Kabelbaum (5) nach Anspruch 1 oder 2, **dadurch gekennzeichnet, dass** die elektronische Signalfilterschaltung einen Widerstand (R) und einen Kondensator (C) umfasst, die eine RC-Reihenschaltung bilden.

4. Elektrischer Kabelbaum (5) nach Anspruch 3, **dadurch gekennzeichnet, dass** der Widerstand (R) parallel mit einem Thermoschalter, wie etwa einem Bimetallstreifen (14a) mit Rückschlag, geschaltet ist.

5. Elektrischer Kabelbaum (5) nach Anspruch 3 oder 4, **dadurch gekennzeichnet, dass** der Kondensator (C) in Reihe mit einer Sicherung (14b) oder mit einem Thermo-Schutzschalter geschaltet ist.

6. Elektrischer Kabelbaum nach einem der vorhergehenden Ansprüche, **dadurch gekennzeichnet, dass** einer der Abschlüsse (T1) oder (T2) einen Verbinder (12) umfasst, in dem die elektronische Signalfilterschaltung integriert ist.

7. Elektrischer Kabelbaum (5) nach einem der Ansprüche 1 bis 5, **dadurch gekennzeichnet, dass** der elektrische Kabelbaum (5) ein feuerfestes Gehäuse (13) umfasst, in dem die elektronische Filterschaltung integriert ist.

8. Elektrischer Kabelbaum (5) nach einem der vorhergehenden Ansprüche, **dadurch gekennzeichnet, dass** die elektronische Filterschaltung mit einem Metallgeflecht und einer wärmeschrumpfenden Ummantelung oder einem Overmoulding bedeckt ist.

9. Turbomaschine mit zumindest einem Rotor, einem Sensor, der dazu geeignet ist, eine Drehzahl des Rotors zu messen, und einem Rechner, der dazu geeignet ist, eine Messung der Drehzahl zu empfangen, **dadurch gekennzeichnet, dass** sie einen elektrischen Kabelbaum nach einem der vorhergehenden Ansprüche umfasst, dessen erster Abschluss mit dem Drehzahlsensor und dessen zweiter Abschluss mit dem Rechner verbunden ist.

10. Turbomaschine (1) nach Anspruch 9, enthaltend einen Niederdruckkörper, dem eine Drehzahl N1 zugeordnet ist, und einen Hochdruckkörper, dem eine Drehzahl N2 zugeordnet ist, sowie Sensoren (2) und (3), die dazu geeignet sind, die Drehzahlen N1 und N2 zu messen, und einen Rechner (4), der dazu geeignet ist, ein Messsignal der Drehzahl N1 und/oder N2 zu empfangen, **dadurch gekennzeichnet, dass** der erste Abschluss (T1) des elektrischen Kabelbaums (5) mit einem der Sensoren (2) oder (3) verbunden ist.

## Claims

1. Electrical harness (5) for a turbomachine, comprising a first termination (T1) connected while in use to an apparatus (3) capable of emitting an electrical signal, and a second termination (T2) connected while in use to a signal processing apparatus (4), **characterised in that** it comprises an electronic circuit for filtering the signal, said circuit comprising at least one electronic component associated with an operating temperature threshold, and at least one thermally triggered electrical interruption means connected in series or in parallel with said at least one electronic component, said at least one electrical interruption means being capable of changing from an open state in which a current cannot flow through it, to a closed state in which a current can flow through it, or reciprocally from a closed state to an open state, from a tripping temperature lower than or equal to the operating temperature threshold of said at least one electronic component, so as to continue to ensure electrical transmission between the first termination and the second termination if the temperature becomes higher than said tripping temperature.

2. Electrical harness (5) according to claim 1, **characterized in that** the electrical interruption means is selected from the following list: thermal switch, fuse and thermal circuit breaker.

3. Electrical harness (5) according to claim 1 or 2, **characterized in that** the electronic signal filter circuit comprises a resistor (R) and a capacitor (C) making a series RC circuit.

4. Electrical harness (5) according to claim 3, **characterised in that** the resistor (**R**) is connected in parallel with a thermal switch such as a bimetallic strip (14a) with a sudden reversal.

5. Electrical harness (**5**) according to claim 3 or 4, **characterized in that** the capacitor (**C**) is connected in series with a fuse (**14b**) or with a thermal circuit breaker.

6. Electrical harness according to one of the preceding claims, **characterized in that** one of the terminations (**T1**) or (**T2**) comprises a connector (**12**) integrating the electronic circuit for filtering said signal.

7. Electrical harness (**5**) according to one of claims 1 to 5, **characterized in that** the electrical harness (**5**) comprises a fire-resistant housing (13) incorporating the electronic filter circuit.

8. Electrical harness (**5**) according to one of the preceding claims, **characterized in that** the electronic filter circuit is covered with metal braiding and a heatshrinkable sheath or an overmoulding.

9. Turbomachinery comprising at least one rotor, a sensor capable of measuring a rotational speed of the rotor and a computer capable of receiving a measurement of said rotational speed, **characterised in that** it comprises an electrical harness according to one of the preceding claims, the first termination of which is connected to the rotational speed sensor and the second termination of which is connected to the computer.

10. Turbomachinery (1) according to claim 9, comprising a low pressure body associated with a rotational speed N1 and a high pressure body associated with a rotational speed N2, comprising sensors (**2**) and (**3**) capable of measuring the rotational speeds N1 and N2 and a computer (**4**) capable of receiving a signal for measuring the speed N1 and/or N2, **characterized in that** the first termination (**T1**) of the electrical harness (**5**) is connected to one of the sensors (**2**) or (**3**).
